# EUROPEAN PATENT APPLICATION

(11) **EP 3 944 175 A1**
(43) Date of publication of application: **26.01.2022**
(21) Application number: 19920425.6
(22) Date of filing: 05.11.2019
(51) Int. Cl.: G06Q 20/40

(54) **CREDIT ANALYSIS ASSISTANCE METHOD, CREDIT ANALYSIS ASSISTANCE SYSTEM, AND NODE**

(30) Priority: 18.03.2019 JP 2019049322
(71) Applicant: Hitachi, Ltd., Tokyo 100-8280 (JP)
(72) Inventor: OYAMATSU, Masayuki, Tokyo 100-8280 (JP); NAGANO, Hirofumi, Tokyo 100-8280 (JP); NAKAO, Sanae, Tokyo 100-8280 (JP); YAMAGATA, Shohei, Tokyo 100-8280 (JP)
(74) Representative: MERH-IP Matias Erny Reichl Hoffmann Patentanwälte PartG mbB
(86) International application number: PCT/JP2019/043295
(87) International publication number: WO 2020/188874

(57) **Abstract**

A credit analysis assistance method for a system 10, the method comprising executing by a node 100 of a party involved in a predetermined transaction a process of extracting evaluation information on a business partner in the transaction from the predetermined transaction data in the distributed ledger 110, a process of extracting an evaluation result on the business partner determined by a predetermined external institution from the predetermined transaction data in the distributed ledger 110, and a process of generating credit information on the business partner by applying a predetermined rule defined in advance to the evaluation information and the evaluation result.

## Description

### [Technical Field]

The present invention relates to a credit analysis assistance method, a credit analysis assistance system, and a node.

### [Background Art]

Supply chains that form a business flow involving procurement and the like within a company group, so-called affiliate supply chains, have been declining due to the economic globalization. Meanwhile, in worksites where manufacturing and services are actually carried out, incidents that cause loss of the trust of stakeholders and general consumers in business flows, such as data falsification, have frequently been occurring.

In view of this, there are some movements in some supply chains, which can include participants with various backgrounds, to judge the credit of these participants and ensure the reliability of transactions, products, and the like in the supply chains.

As such a conventional technique related to credit judgment, a commercial transaction credit granting system (see PTL 1), for example, has been proposed which enables a commercial transaction between companies based on a real-time credit judgment on a site constructed on a computer network, for example. The commercial transaction credit granting system is characterized in that a computer that manages the site has: transactor authentication means for causing the computer to have an examination station make a participation condition judgment on participation condition data inputted by a party attempting to be newly involved in a commercial transaction on the site as a seller or a buyer, and causing the computer to authenticate the party as a transactor if a condition for participation is satisfied; rank setting means characterized in that it causes the computer to set the rank of the transactor having passed the authentication based on predetermined company data on the transactor containing at least one of capital, sales, or business history and that the company data is based on company information extracted from data obtained by aggregating information based on a predetermined scoring method from pieces of data collected by a website crawler, and causing determination means (3960) to determine whether the information is company information, if so, extract the company information, output the result to a relay file (3970), and store it in a company information database (30) via the relay file (3970); transaction limit amount setting means for causing the computer to set a transaction limit amount for the commercial transaction by the transactor based on the rank set by the rank setting means; bankruptcy probability evaluation means for causing the computer to calculate the probability of bankruptcy of a borrower company based on the set rank; commercial transaction limiting means characterized in that it causes the computer to limit the commercial transaction if the amount of the commercial transaction exceeds the transaction limit amount for the seller or the buyer in the commercial transaction, and causes the computer to issue a warning to the seller or the buyer or stop the commercial transaction if the transaction limit amount is exceeded; transaction data management means characterized in that it causes the computer to manage predetermined transaction data on a previous transaction on the site by the transactor having passed the authentication, and causes the computer to refer to the transaction data managed by the transaction data management means at the time of determining the rank, and make a judgment to set the rank according to a predetermined condition; and brokerage rate evaluation means for causing the computer to set the sum of the calculated bankruptcy probability, the cost-of-capital ratio of the borrower company, and the expense ratio of the borrower company as the minimum required brokerage rate. The transaction data is characterized in that it contains at least one piece of information among complaint information on the transactor regarding whether any complaint has been made in the commercial transaction, information on bankruptcy of the transactor, information on dishonor of a promissory note in which the transactor has been involved, the minimum required brokerage rate, information on seizure in which the transactor has been involved, and insecurity information on the transactor regarding whether there is any sign of a financial decline. The scoring method is characterized in that, when there are particular item indicators, points set respectively for the items are added, and the page is determined as one with company information when a predetermined threshold value is exceeded. By using the relay file (3970), credit control can always be performed based on fresh company information.

Also, a credit granting method for a credit granting system coupled to a user terminal via a network (see PTL 2), for example, has been proposed. The credit granting method is characterized in that it includes: a request information reception step of receiving request information containing a credit judgment condition from the user terminal; a credit information extraction step of extracting a piece of credit information from a credit information database in which pieces of credit information have been stored in advance, based on the request information; a credit judgment step of judging credit-worthiness based on the request information and the extracted piece of credit information; and credit grant information transmission step of transmitting the result obtained in the credit judgment step as credit grant information to the user terminal.

Further, an information processing apparatus (see PTL 3), for example, has been proposed which includes a storage device that stores pieces of EDI data on electronic commercial transactions in an EDI system, and an arithmetic device that executes a process of reading out the pieces of EDI data on companies from the storage device, applying an evaluation function held in advance to the information of the read piece of EDI data on a predetermined company to determine an evaluation index of the predetermined company as a business partner, and outputting the information of the evaluation index to a predetermined apparatus.

### [Citation List]

### [Patent Literatures]

[PTL 1] Japanese Patent Application Publication No. 2012-168984
[PTL 2] Japanese Patent Application Publication No. 2002-157422
[PTL 3] Japanese Patent Application Publication No. 2014-115721

### [Summary of Invention]

### [Technical Problems]

Here, due to a difference in position between participants in a supply chain, the range of use of information on credit as above (hereinafter referred to as credit information) varies between them. For example, there is a situation where a buyer can use the credit information on a supplier whereas the supplier cannot use the credit information on the buyer.

In this case, the credit information is used in a one-way manner and cannot be referred to in a two-way manner. Moreover, the credit analysis method tends to be biased to the buyer's perspective, which leads to a fear that the credit information itself is not sufficiently verified. In other words, the reliability of the credit information is easily shaken. Such problems will be compounded if the credit analysis is performed without the hierarchical structure of the participants in the supply chain taken into account.

It is therefore an objective of the present invention to provide a technique that enables efficient and wide use of accurate credit information on supply chain participants.

### [Solution to Problems]

A credit analysis assistance method of the present invention to solve the above objective for a system including a plurality of nodes each holding, in a distributed ledger, predetermined transaction data on transactions in a supply chain, the method comprising executing by a node of a party involved in a predetermined transaction a process of extracting evaluation information on a business partner in the transaction from the predetermined transaction data in the distributed ledger, a process of extracting an evaluation result on the business partner determined by a predetermined external institution from the predetermined transaction data in the distributed ledger, and a process of generating credit information on the business partner by applying a predetermined rule defined in advance to the evaluation information and the evaluation result.

A credit analysis assistance system of the present invention including a plurality of nodes each holding, in a distributed ledger, predetermined transaction data on transactions in a supply chain, the system comprising executing by a node of a party involved in a predetermined transaction a process of extracting evaluation information on a business partner in the transaction from the predetermined transaction data in the distributed ledger, a process of extracting an evaluation result on the business partner determined by a predetermined external institution from the predetermined transaction data in the distributed ledger, and a process of generating credit information on the business partner by applying a predetermined rule defined in advance to the evaluation information and the evaluation result.

A node of the present invention included in a distributed ledger system and holding, in a distributed ledger, predetermined transaction data on transactions in a supply chain, the node comprising an arithmetic device that executes a process of extracting evaluation information on a business partner in a predetermined transaction from the predetermined transaction data in the distributed ledger, a process of extracting an evaluation result on the business partner determined by a predetermined external institution from the predetermined transaction data in the distributed ledger, and a process of generating credit information on the business partner by applying a predetermined rule defined in advance to the evaluation information and the evaluation result.

### [Advantageous Effects of Invention]

The present invention enables efficient and wide use of accurate credit information on supply chain participants.

### [Brief Description of Drawings]

[Fig. 1] Fig. 1 is a diagram of a network configuration including a credit analysis assistance system in the present embodiment.
[Fig. 2] Fig. 2 is a diagram illustrating an example hardware configuration of a node in the present embodiment.
[Fig. 3] Fig. 3 is a diagram illustrating an example configuration of a blockchain in the present embodiment.
[Fig. 4] Fig. 4 is a diagram illustrating an example data configuration of order reception-placement data (transaction) in the present embodiment.
[Fig. 5] Fig. 5 is a diagram illustrating an example data configuration of payment data (transaction) in the present embodiment.
[Fig. 6] Fig. 6 is a diagram illustrating an example data configuration of business partner evaluation data (transaction) in the present embodiment.
[Fig. 7] Fig. 7 is a diagram illustrating an example data configuration of credit calculation result data (transaction) in the present embodiment.
[Fig. 8] Fig. 8 is a diagram illustrating an example data configuration of physical distribution data (transaction) in the present embodiment.
[Fig. 9] Fig. 9 is a diagram illustrating Flow Example 1 of a credit analysis assistance method in the present embodiment.
[Fig. 10] Fig. 10 is a diagram illustrating Flow Example 2 of the credit analysis assistance method in the present embodiment.
[Fig. 11] Fig. 11 is a diagram illustrating Flow Example 3 of the credit analysis assistance method in the present embodiment.
[Fig. 12] Fig. 12 is a diagram illustrating Flow Example 4 of the credit analysis assistance method in the present embodiment.
[Fig. 13] Fig. 13 is a diagram illustrating Flow Example 5 of the credit analysis assistance method in the present embodiment.
[Fig. 14] Fig. 14 is a diagram illustrating Flow Example 6 of the credit analysis assistance method in the present embodiment.
[Fig. 15] Fig. 15 is a diagram illustrating Screen Example 1 in the present embodiment.
[Fig. 16] Fig. 16 is a diagram illustrating Screen Example 2 in the present embodiment.

### [Description of Embodiment]

### ---Network Configuration---

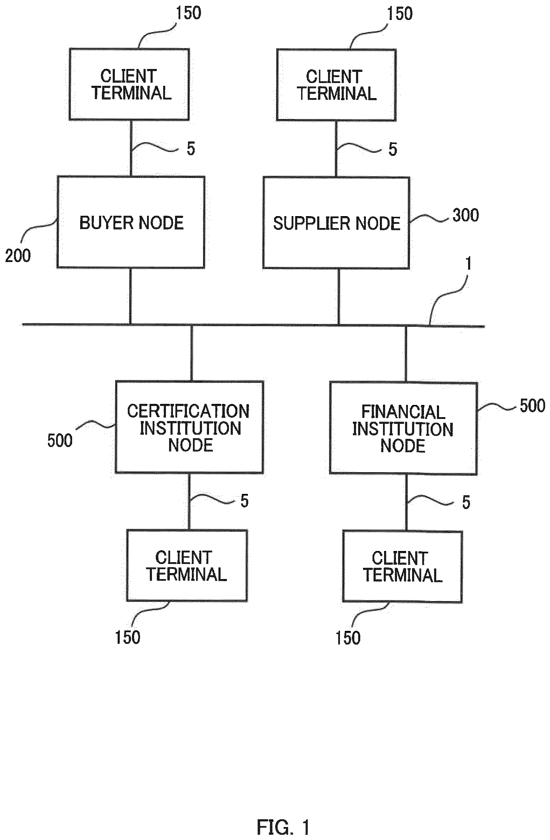

Hereinbelow, an embodiment of the present invention will be described in detail by using the drawings. Fig. 1 is a diagram of a network configuration including a credit analysis assistance system 10 in the present embodiment. The credit analysis assistance system 10 illustrated in Fig. 1 is a computer system that enables efficient and wide use of accurate credit information on supply chain participants.

The credit analysis assistance system 10 in the present embodiment includes nodes 100 communicatively linked to one another via a P2P network 1, for example. These nodes form a distributed ledger system. That is, the credit analysis assistance system 10 in the present embodiment forms a distributed ledger system.

In the distributed ledger system, nodes referred to as miners judge the validity of transaction data, i.e., transaction data in the P2P network 1 and perform a confirmation process via an operation of calculating a particular hash value called proof of work. Pieces of transaction data which have been thus confirmed and for which a consensus has been built are combined into a single block and written into a distributed ledger called a blockchain. This distributed ledger is equally provided to each node, and the distributed ledger is synchronized among the nodes.

Incidentally, the confirmation process with proof of work has been taken in the above as an example of the validity judgment on the transaction data. However, the method to be employed in the credit analysis assistance system 10 in the present embodiment is not limited to this.

The above P2P network 1 is coupled to an appropriate network 5, such as the Internet or a LAN(s), for example, and each node 100 is capable of performing data communication with a client terminal 150 through these networks 1 and 5.

This client terminal 150 is a terminal that executes a process of accessing a predetermined API 111 in the node 100 via the P2P network 1 and the network 5, obtaining, for example, credit information (generated about buyers or suppliers) from the node 100, and displaying it on a display or the like, and a process of receiving an input from a person in charge or the like at the buyer, supplier, financial institution, or external institution using the client terminal 150 (e.g., designation of a buyer or supplier whose credit information is to be checked or an input of evaluation information and an evaluation result) and distributing it to the nodes 100, which are host apparatuses.

Note that, as illustrated in Fig. 1, four types of nodes being a buyer node 200, supplier node 300, certification institution node 400, and financial institution node 500 are exemplarily given as the nodes 100 in the network configuration in the present embodiment. Incidentally, these individual nodes 200 to 500 will be described as the nodes 100 when collectively mentioned (the same applies below).

The types and number of such nodes are not limited, as a matter of course. Nodes for stakeholders in the supply chain and nodes for various entities that are provided with information from such stakeholders can both be included as well.

Of the above nodes 100, the buyer node 200 is a node operated by the buyers in the supply chain and is a distributed ledger node. Note that these buyers can of course be suppliers too. The same applies to the suppliers that operate the supplier node 300.

When a buyer as above in the supply chain carries out a transaction with a supplier as above by placing an order, the buyer node 200 issues transaction data on the transaction, and stores the transaction data in its distributed ledger 110 after a consensus is built in the distributed ledger system.

The supplier node 300 is a node operated by the suppliers in the supply chain and is a distributed ledger node.

When a supplier as above in the supply chain carries out a transaction with a buyer by receiving an order, the supplier node 300 issues transaction data on the transaction, and stores the transaction data in its distributed ledger 110 after a consensus is built in the distributed ledger system.

Also, the certification institution node 400 is a node operated by certification institutions (external institutions), such as ISO, and is a distributed ledger node. The certification institutions are institutions that manage standards defining the qualities, levels, and the like of products and services distributed via transactions in the supply chain.

The above certification institutions examine whether the buyers and the suppliers comply with the above standards. For this purpose, the certification institution node 400 issues transaction data containing the result of the compliance examination (results of evaluations by the external institutions), and stores the transaction data in its distributed ledger 110 after a consensus is built in the distributed ledger system.

Also, the financial institution node 500 is a node operated by financial institutions, such as banks, and is a distributed ledger node. Such financial institutions provide the above buyers and suppliers with financial services such as financing and payment for their transactions in the supply chain. The financial institutions therefore hold information on the financial statuses of the buyers and the suppliers.

For this purpose, the financial institution node 500 issues transaction data containing the results of evaluations on the financial statuses of the buyers and suppliers, such as their situations of loan repayment and their records of delayed payment, and stores the transaction data in its distributed ledger 110 after a consensus is built in the distributed ledger system.

Note that as exemplarily illustrated in Fig. 1, suppliers in supply chains are often in a hierarchical structure. This hierarchical structure corresponds to a configuration including, for example, a primary supplier that directly receives an order from a buyer, a secondary supplier that procures a component necessary for this primary supplier to manufacture the ordered product, and further a tertiary supplier that procures a material necessary for this secondary supplier to manufacture to the above component. A case where the hierarchical structure has a depth of three tiers (primary to tertiary) is described here, but the depth is not limited to this, as a matter of course.

Meanwhile, in recent years, various derivative techniques based on the above blockchain technique have been proposed and kept being developed. Main features of blockchains at present include (1) in a transaction between participants on a blockchain network, settling the transaction via consensus building and approval by (any or particular) participants instead of a centralized institution, (2) combining a plurality of pieces of transaction data into blocks, recording the blocks in a cascaded manner in a distributed ledger, and performing hash calculation on the series of blocks to render falsification substantially impossible, and (3) sharing the same ledger data (distributed ledger) among all participants to enable all participants to check transactions.

Because of the above features, applications of the blockchain techniques to a wide range of fields, such as financial fields and IoT (Internet of Thing), have been considered as schemes to manage and share reliable data and conduct and manage transactions based on contracts. Using an infrastructure providing such a blockchain (hereinafter referred to as the blockchain infrastructure) enables information sharing and execution of transactions among a plurality of entities (e.g., a plurality of companies or the like involved in a consortium or supply chain in a particular industry) without management by a centralized institution.

In addition, systems have been developed that enable a blockchain to be applied not only to simple transactions of virtual currency, such as bitcoin, but also to complicated transaction conditions and various applications, and it has become possible to manage not only (transaction) data but also a logic within a blockchain. This logic is called a smart contract.

In a blockchain infrastructure having a function of executing the above smart contract, the smart contract itself and input data for the smart contract are managed. To give a brief description, the smart contract itself is like (a plurality of) functions. Further, the input data is like the names of the smart contract and functions to be called, or arguments to be given to the functions. By using the function of executing the smart contract, a transaction can be executed in accordance with a pre-defined contract.

Here, the smart contract and its input data are managed in the blockchain in a cascaded manner with a signature. Therefore, by having a blockchain infrastructure with a smart contract execution function, it is possible to make the registrant of data and a logic clear and also always check that registered contents are not changed.

The credit analysis assistance system 10 in the present embodiment is operated based on a technical background related to such a distributed ledger.

### ---Hardware Configuration---

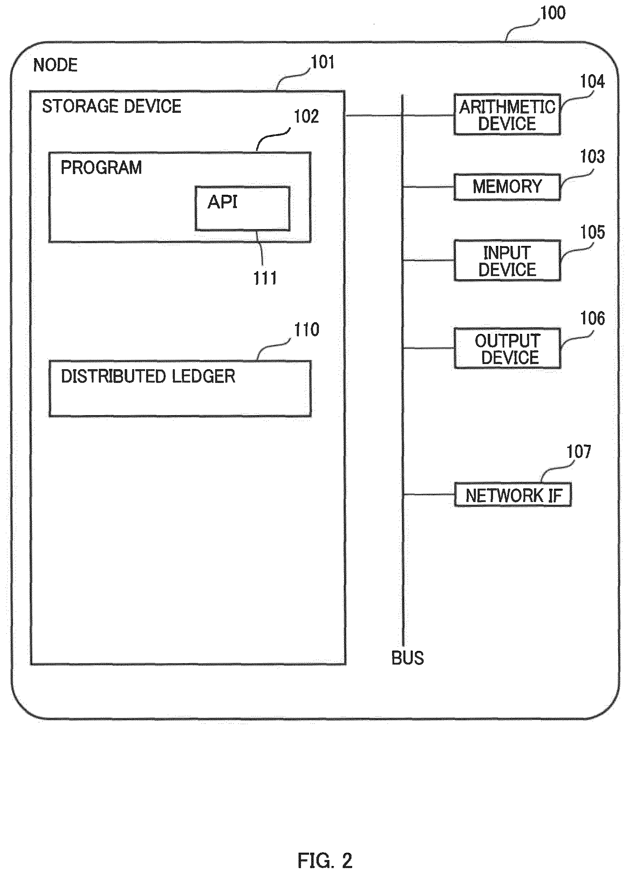

Incidentally, a hardware configuration of the nodes 100 mainly forming the credit analysis assistance system 10 is illustrated in Fig. 2. Specifically, each node 100 includes a storage device 101, a memory 103, a CPU 104, an input device 105, an output device 106, and a network interface 107.

Of these, the storage device 101 includes an appropriate non-volatile storage element, such as an SSD (Solid State Drive) or a hard disk drive.

Also, the memory 103 includes a volatile storage element, such as a RAM.

Also, the CPU 104 is an arithmetic device that, for example, reads out a program 102 held in the storage device 101 into the memory 103 and executes it to comprehensively control the apparatus itself and also performs various determination, arithmetic, and control processes.

Also, the input device 105 is a set of devices such as a keyboard and a mouse that receive key inputs and audio inputs from the user.

Also, the output device 106 is a set of devices such as a display and a speaker that present data processed by the CPU 104.

Also, the network interface 107 is a device that is coupled to the network 1 and performs communication processes with the other nodes 100.

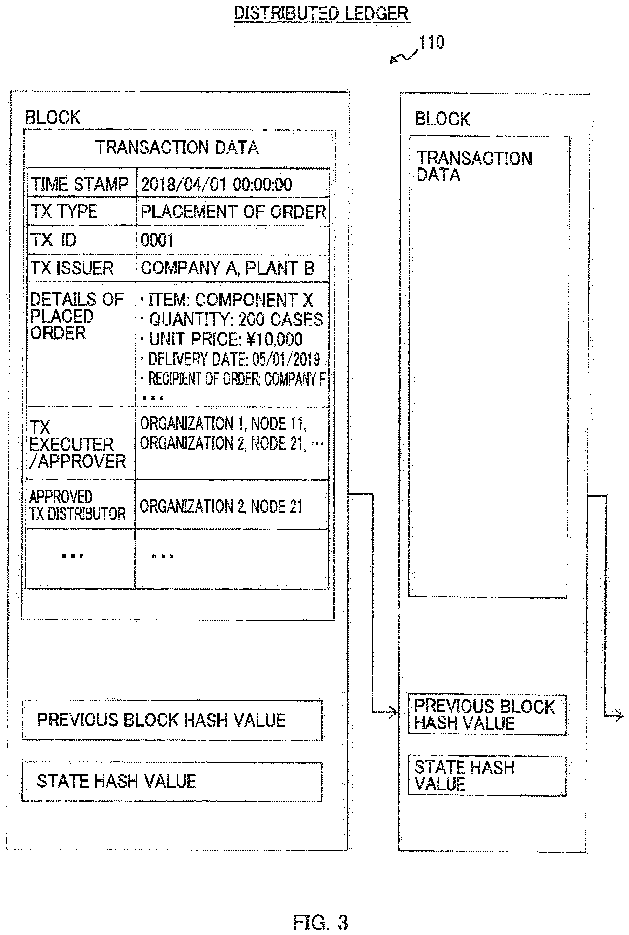

Note that the storage device 101 stores at least the distributed ledger 110 in addition to the program 102 for implementing functions necessary for the credit analysis assistance system 10 in the present embodiment. The configuration of the distributed ledger 110 itself is a common configuration. For example, the one exemplarily illustrated in Fig. 3 is a possible configuration.

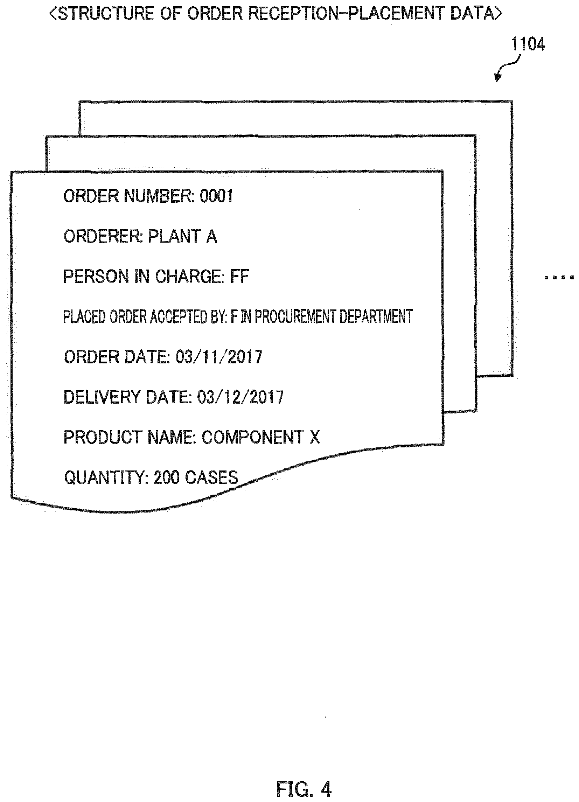

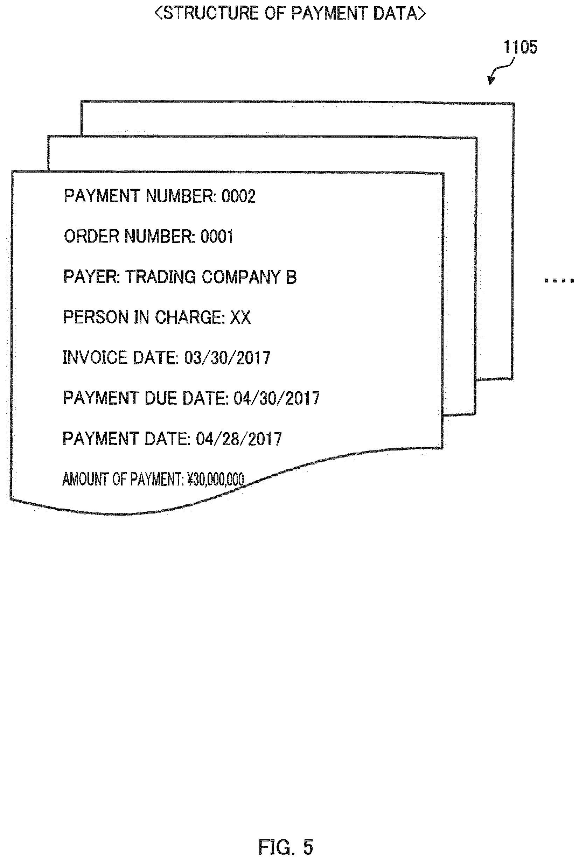

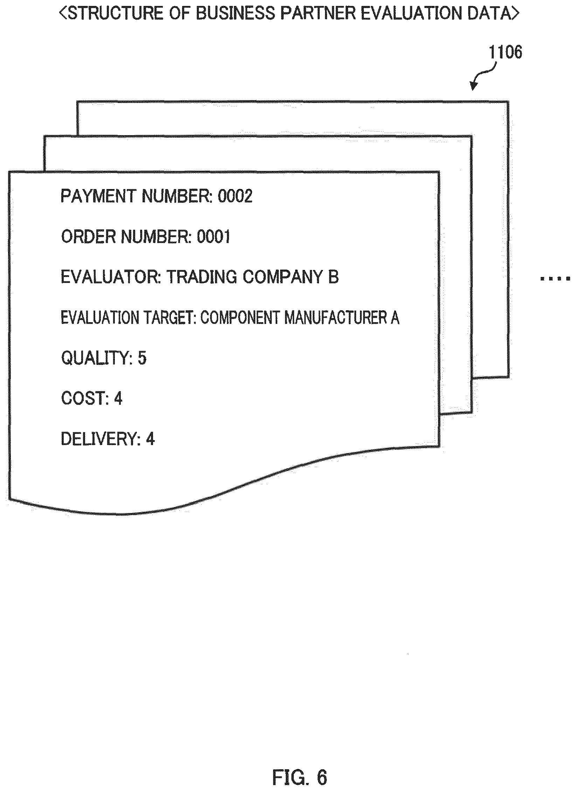

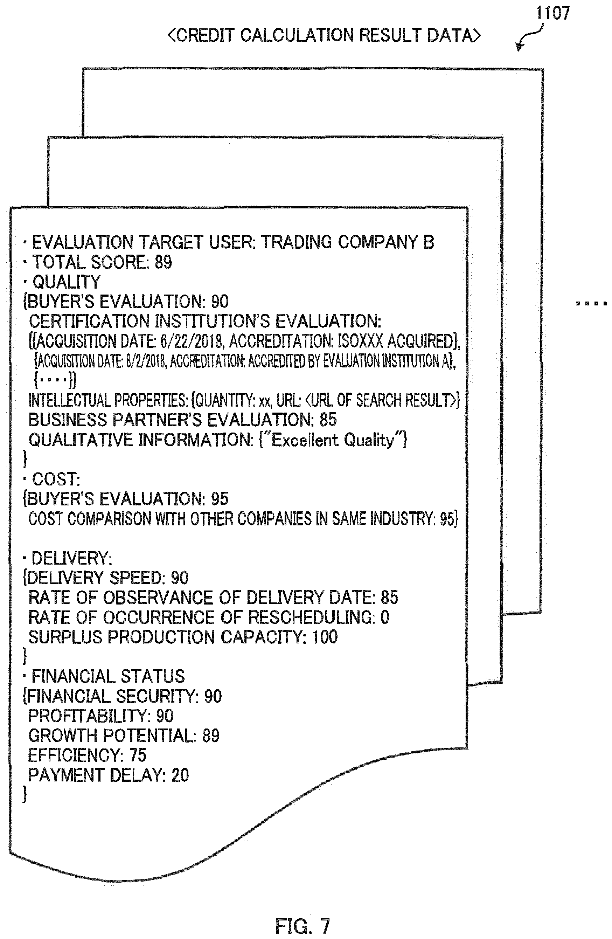

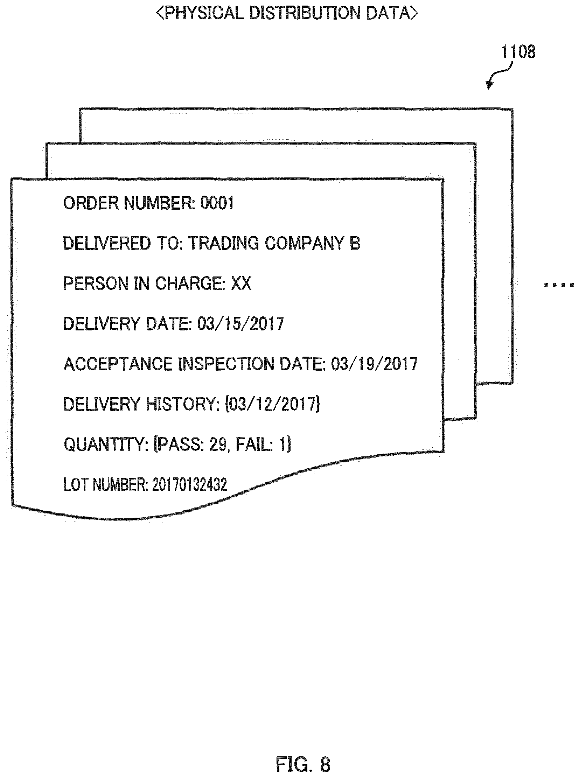

Note that the pieces of transaction data held in the above distributed ledger 110 may contain values representing events that occurred in connection with transactions in the supply chain, such as order reception-placement data (order reception-placement data 1104 in Fig. 4), payment data ((payment data 1105 in Fig. 5), business partner evaluation data (business partner evaluation data 1106 in Fig. 6), credit calculation result data (credit calculation result data 1107 in Fig. 7), and physical distribution data (physical distribution data 1108 in Fig. 8).

The above order reception-placement data 1104), payment data 1105, business partner evaluation data 1106, credit calculation result data 1107), and physical distribution data 1108 can each represent a transaction that forms a blockchain.

Of these, the business partner evaluation data 1106 in Fig. 6 is pieces of data in which buyers and suppliers, i.e., business partners in the supply chain, evaluate each other. Each of these pieces of business partner evaluation data 1106 is a set of evaluation values on items of the quality, cost, and delivery of an ordered or supplied product or service that were inputted by a person in charge at a buyer or a supplier regarding its business partner and issued as transaction data by the buyer node 200 or the supplier node 300 and stored in the distributed ledger 110 after a consensus is built.

Also, the credit calculation result data 1107 in Fig. 7 corresponds to pieces of credit information generated about evaluation-target buyers and suppliers. Each of these pieces of credit calculation result data 1107 is a piece of credit information generated by one of the nodes 100 included in the credit analysis assistance system 10, issued as transaction data, and stored in the distributed ledger 110 after a consensus is built.

### ---Processing Involved in Reception and Placement of Order---

An actual procedure of a credit analysis assistance method in the present embodiment will be described below based on a drawing. Various operations corresponding to the credit analysis assistance method to be described below are implemented by programs read out by the nodes 100 included in the credit analysis assistance system 10 into their memories or the like and executed by them. Also, these programs include code for performing the various operations to be described below.

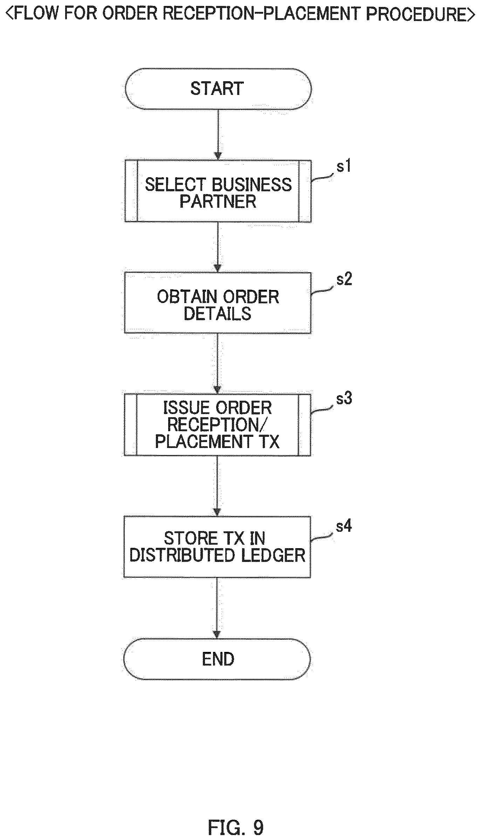

Fig. 9 is a diagram illustrating Flow Example 1 of the credit analysis assistance method in the present embodiment. Here, assume a situation where a buyer in the supply chain performs an order placement procedure to procure components for manufacturing products, for example. Assume also that the client terminal 150 of this buyer transmits a business partner selection request containing supplier requirements designated by the buyer as a key to the buyer node 200 via the network 5.

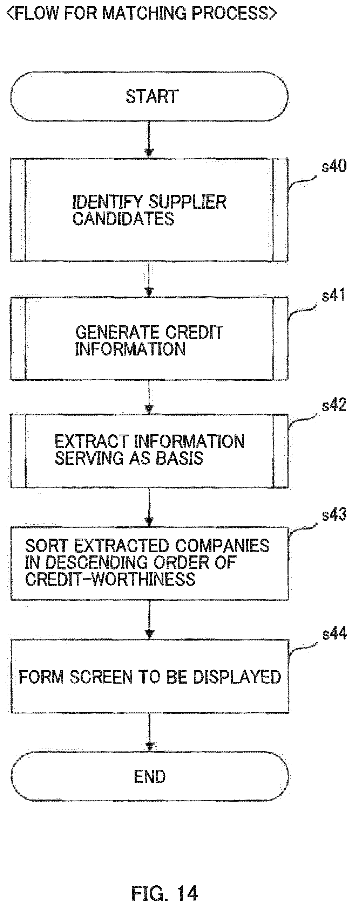

In this case, the buyer node 200 receives the business partner selection request, executes a later-described matching process (Fig. 14) to thereby select supplier candidates matching the requirements designated by the buyer, and displays them on the client terminal 150 (s1).

The buyer views information on the supplier candidates and designates one that is preferable as a business partner this time. The client terminal 150 returns the designated contents, i.e., information on the supplier determined as the business partner, to the buyer node 200.

The buyer node 200 then obtains the information on the supplier designated by the buyer through the process in s1 and obtains the order details inputted into the client terminal 150 by the buyer (s2). These order details are like the order reception-placement data 1104 exemplarily illustrated in Fig. 4.

Subsequently, the buyer node 200 generates transaction data containing the order details obtained in s2, and issues this via the network 1 (s3).

The other nodes coupled to the network 1 receive the transaction data issued in s3 by the buyer node 200 and, with the above buyer node 200, execute a predetermined process such as consensus building following a smart contract held in advance, for example.

The buyer node 200 (and the other nodes) stores the transaction data after the consensus building in its distributed ledger 110 (s4) and terminates the processing.

Note that the supplier having received the order placed by the above buyer performs a predetermined operation procedure and arranges shipment and delivery of the components or the like to the buyer in accordance with the details of the received order. It is of course possible that, when such operation processes are performed on the supplier side, the supplier node 300 issues transaction data for each procedure with the details of the process contained therein, and each node stores the transaction data in its distributed ledger 110 after consensus building or the like.

### ---Processing Involved in Acceptance Inspection---

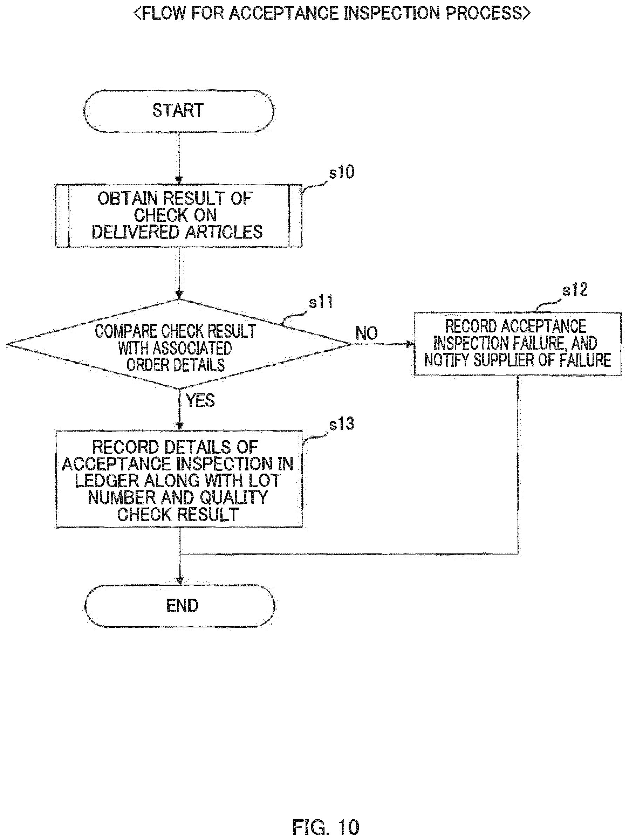

Fig. 10 is a diagram illustrating Flow Example 2 of the credit analysis assistance method in the present embodiment. Here, a description will be given of processing in a situation where the above buyer receives articles delivered from the supplier and performs an acceptance inspection on them. The buyer executes a check, as the acceptance inspection, on predetermined items such as the quantity and specified quality of the articles delivered from the supplier.

In this case, the buyer node 200 obtains the result of the above check from, for example, the client terminal 150 of the buyer (s10). This check result is associated with values such as the order number of the delivered articles and identification information of the buyer who placed the order, as a matter of course.

Subsequently, the buyer node 200 extracts, for example, the order number from the check result obtained in s10 and, with this as a key, identifies the order details described in the corresponding piece of transaction data in the distributed ledger 110 containing the value (e.g., the values in the section "Details of Placed Order" in the example of Fig. 3), and compares these order details and the check result obtained in s10 with each other (s11).

If the result of the above determination indicates that the delivered articles do not match the order details (S11: No), the buyer node 200 notifies the client terminal 150 of the supplier of a determination result indicating a failure in the acceptance inspection (s13). At this time, the information indicating the failure in the acceptance inspection may be managed being associated with the corresponding order number or transaction data in an appropriate state DB (not illustrated). Alternatively, transaction data containing the information indicating the failure in the acceptance inspection may be issued and stored in the distributed ledger 110 after consensus building or the like.

On the other hand, if the result of the above determination indicates that the delivered articles match the order details (S11: Yes), the buyer node 200 issues transaction data containing the determination result and stores it in the distributed ledger 110 after a consensus is built with the other nodes (s14), and terminates the processing. Note that, in this transaction data, the amount of payment to be made indicated in the details of the placed order (e.g., the unit price of the ordered articles multiplied by the ordered quantity) is also contained as the acceptance inspection result.

### ---Processing Involved in Payment---

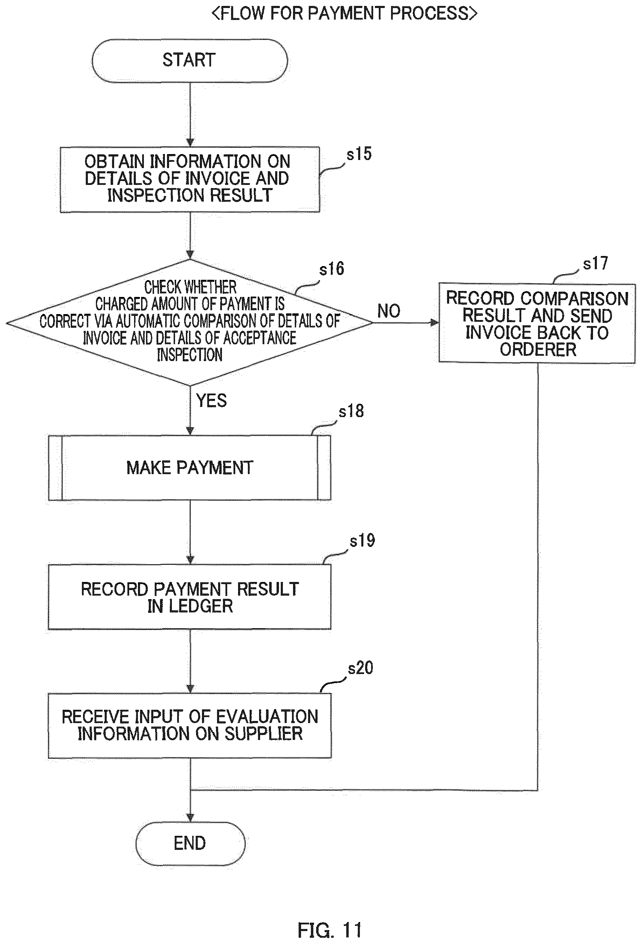

Fig. 11 is a diagram illustrating Flow Example 3 of the credit analysis assistance method in the present embodiment. Here, processing involved in payment operations between the buyer and the supplier will be described.

In this case, the buyer node 200 refers to the details of an invoice received from the supplier node 300 (issued in response to the placement of the order) and the acceptance inspection result obtained in the above-described acceptance inspection flow (Fig. 10) (s15) and determines whether the charged amount of payment matches the amount of payment to be made described in the details of the acceptance inspection (s16).

If the result of the above determination indicates that the charged amount of payment and the amount of payment to be made do not match each other (sl6: No), the buyer node 200 notifies the client terminal 150 of the supplier of this result (s17) and terminates the processing. At this time, the information indicating the mismatch between the amounts of payment may be managed in an appropriate state DB (not illustrated) in association with the corresponding order number or transaction data. Alternatively, transaction data containing the information indicating the mismatch between the amounts of payment may be issued and stored in the distributed ledger 110 after consensus building or the like.

On the other hand, if the result of the above determination indicates that the charged amount of payment and the amount of payment to be made match each other (sl6: Yes), the buyer node 200 instructs a payment service provided on the supply chain's infrastructure (or an existing payment operation system which the buyer has or the like) to perform a payment process with the charged amount of payment (s18).

Also, the buyer node 200 obtains the result of the payment process performed in sl8 from the above payment service or the like and issues transaction data containing it (e.g., the payment data in Fig. 5) and stores the transaction data in the distributed ledger 110 after a consensus is built with the other nodes (sl9).

Subsequently, the buyer node 200 obtains from the client terminal 150 evaluation information on the above supplier, which is the business partner for which the payment has been completed, regarding items of, for example, the quality, cost, and delivery, issues transaction data containing it (e.g., the business partner evaluation data in Fig. 6), and stores the transaction data in the distributed ledger 110 after a consensus is built with the other nodes (s20).

Note that the evaluation information on the above items can include, for example, information on each of the quality, cost, and delivery indicating a point on a five-point scale.

### ---Process of Generating Credit Information---

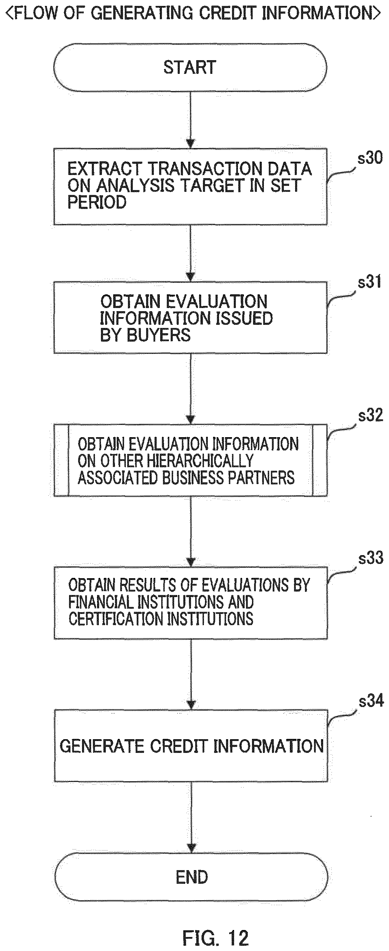

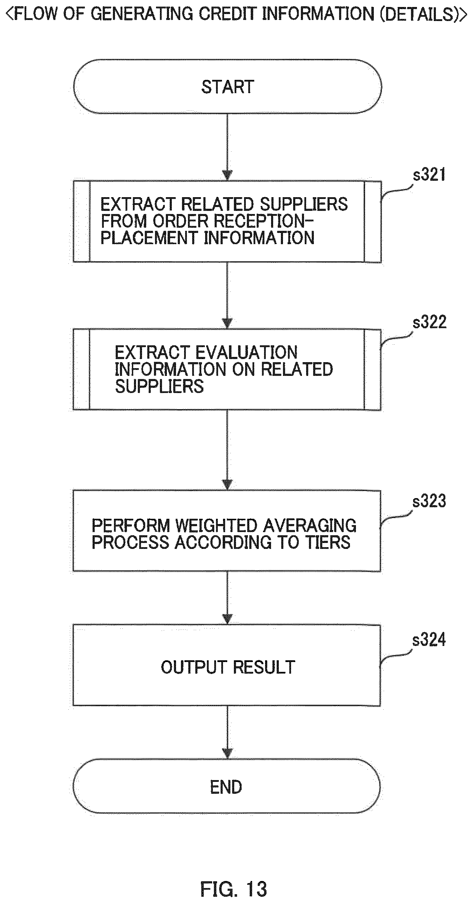

Fig. 12 is a diagram illustrating Flow Example 4 of the credit analysis assistance method in the present embodiment, and Fig. 13 is a diagram illustrating Flow Example 5 of the credit analysis assistance method in the present embodiment. Here, a flow of generating credit information will be described. Note that the entity that executes the processes in this flow may be any node among the nodes 100. For example, various situations are possible such as when the node is the buyer node 200 of a buyer who wishes to check the credit information on suppliers, the supplier node 300 of a supplier who wishes to check the credit information on buyers, or the financial institution node 500 of a financial institution that has received a financing request for funds for payment or the like from a buyer and wishes to check the credit information on this buyer.

In the following example, a description will be given of a flow corresponding to processing in a situation where a buyer checks the credit information on a supplier.

For this purpose, the buyer node 200 accesses its distributed ledger 110 and extracts the pieces of business partner evaluation data 1106 in which a supplier (e.g., one designated by the above buyer) is the evaluation target among the pieces of transaction data in a period designated by the client terminal 150 of the buyer (e.g., the last six months, etc.) (s30).

The buyer node 200 also obtains the values of the quality, cost, and delivery from each piece of business partner evaluation data obtained in s30 (s31) . That is, at this point, the pieces of evaluation information in which the supplier was evaluated by various buyers and the like are collected.

Subsequently, the buyer node 200 obtains pieces of evaluation information on other suppliers having a business relationship (being partners for procurement of components or the like) with the above supplier in the supply chain (they will be referred to as related business partners), as in s30 and s31 (s32).

Details of this s32 are illustrated in the flow in Fig. 13. Specifically, the buyer node 200 refers to the pieces of order reception-placement data 1104 in the distributed ledger 110 and identifies the suppliers being the above related business partners (s321). For example, assuming that a supplier who has received an order placed by the buyer is "Company A", it is possible to identify a lower-level supplier (e.g., "Company B") in the hierarchical structure to which this "Company A" has placed an order as a buyer by identifying a piece of order reception-placement data 1104 in which the orderer is "Company A". Similarly, by identifying a piece of order reception-placement data 1104 in which the orderer is "Company B," it is also possible to identify a lower-level supplier (e.g., "Company C") in the hierarchical structure to which this "Company B" has placed an order as a buyer.

Subsequently, the buyer node 200 refers to the pieces of business partner evaluation data 1105 in the distributed ledger 110 on the suppliers being the related business partners identified in s321, and obtains the pieces of evaluation information contained therein (s322).

Also, the buyer node 200 performs a weighted averaging process on the pieces of evaluation information, i.e., the values of the quality, cost, and delivery, obtained in s322 for the suppliers being the related business partners according to the tiers to which the suppliers belong ("Company A" belongs to the first tier, "Company B" belongs to the second tier, and "Company C" belongs to the third tier) (s323).

For example, for a two-tier supply chain, a computation such as α × QCDme + (1 - α) × {α2 × Avg.(QCD(2, a), QCD(2, b) ...) + (1 - α2) × Avg.(QCD(3, a), QCD(3, b) ...}, is performed.

Here, α represents a weight value for the evaluation value of the first-tier supplier "Company A" (an average value of the values of one of the items of the quality, cost, and delivery), α2 represents a weight value for the evaluation value of the second-tier supplier "Company B", QCDme represents the evaluation value of "Company A", QCD(n, i) represents the evaluation value of the i-th supplier belonging to the n-th tier, and Avg represents an average or median.

Also, the buyer node 200 outputs the result of the process in s323, i.e., the resultant value of the weighted averaging process obtained for each of the suppliers being the related business partners, to the memory 103 (s324).

The description now returns to the flow in Fig. 12.

The buyer node 200 also obtains the results of evaluations on the above suppliers (which may conceptually include the suppliers being the related business partners) by the corresponding financial institutions and certification institutions from the distributed ledger 110 (s33). These evaluation results have been registered by the certification institution node 400 and the financial institution node 500 in the distributed ledger 110 as pieces of business partner evaluation data 1106.

Subsequently, the buyer node 200 generates credit information (see Fig. 7) by applying a predetermined rule to the above (first-tier) supplier's evaluation information on the items of the quality, cost, and delivery (subjected to the weighted averaging process) and results of the evaluations by the corresponding financial institution and certification institution, which have been obtained up to s33 (s34), and then terminates the processing.

In this case, the buyer node 200 generates the credit information by a point deduction method starting from 100 points for each item. For example, for each of the quality, cost, and delivery, 1 point is deducted from 100 points when 4 points are given out of 5 points, 2 points are deducted from 100 points when 3 points are given, and so on.

Note that each item may further be subdivided, as exemplarily illustrated in Fig. 7. In this case, the evaluation information itself is subdivided as well.

### ---Matching Process---

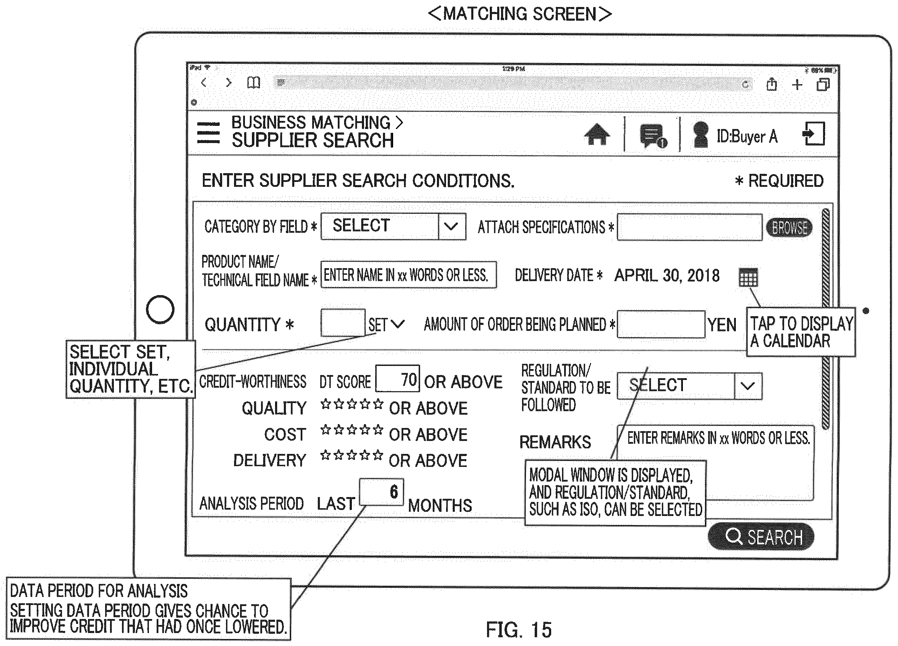

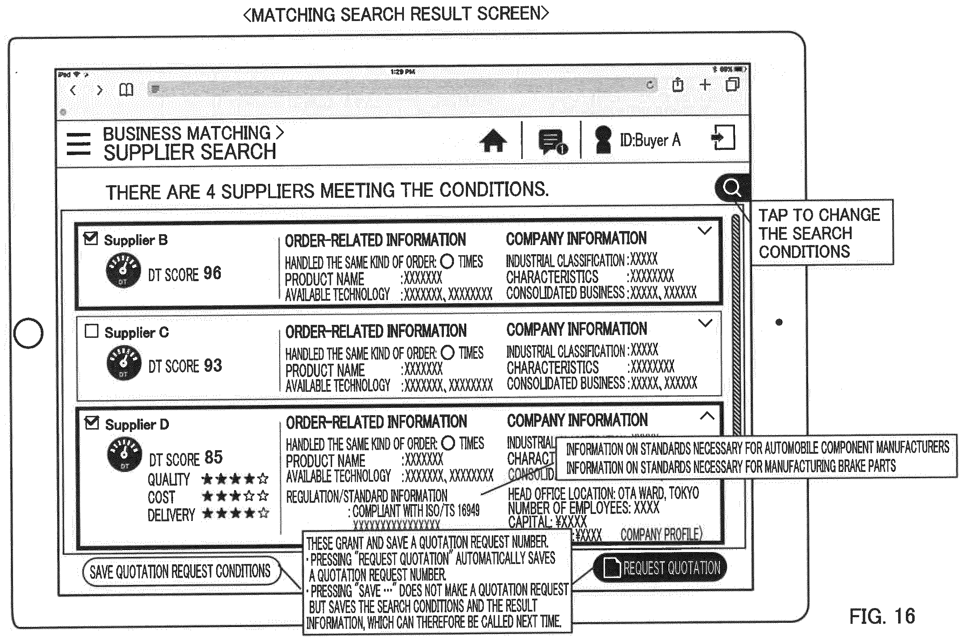

Fig. 14 is a diagram illustrating Flow Example 4 of the credit analysis assistance method in the present embodiment, and Figs. 15 and 16 illustrate an example of output screens. A process of matching participants in the supply chain will be described next. Here, the description will be given assuming a situation where a company designates a desired supplier requirement and a matching process is performed according to it. However, the situation is not limited to this. For example, a situation where a company designates a desired buyer requirement and a matching process is performed according to it is also a possible situation, as a matter of course.

In this case, for example, the buyer node 200 receives search conditions from the client terminal 150 in advance via the screen illustrated in Fig. 15, and refers to the pieces of order reception-placement data 1104 in the distributed ledger 110 to identify supplier candidates who previously made transactions matching the technical field, product name, delivery, quantity, unit price, etc. among the above conditions (s40) .

The buyer node 200 also generates credit information on the supplier candidates identified in s40 as in the flows in Figs. 13 and 14 (s41).

Subsequently, the buyer node 200, for example, extracts the number of times an order placed under the same conditions (the conditions in s40) has been handled and the like (e.g., the order-related information and the company information in the screen in Fig. 16) from pieces of order reception-placement data 1104 in the distributed ledger 110 or aggregates the extracted values to generate information serving as a basis for the above credit information (s42).

Also, the buyer node 200 selects companies in descending order of the credit-worthiness shown in the credit information (s43), generates a screen in which to display this, and causes the client terminal 150 to display the screen (s44). In the screen example illustrated in Fig. 16, a screen is displayed in which supplier candidates are listed with "Supplier B" as the top supplier, followed by "Supplier C" and "Supplier D".

By viewing this screen and checking the credit information and its basis, buyers can select a preferable company as a business partner without trouble.

The best mode for carrying out the present invention and the like have been specifically described above. However, the present invention is not limited to this, and various changes can be made without departing from its gist.

The present embodiment as above enables efficient and wide use of accurate credit information on supply chain participants.

From the statements herein, at least the following are clear. Specifically, the credit analysis assistance apparatus in the present embodiment may be such that the node extracts an evaluation value of each of a quality, a cost, and delivery of a transaction target as the evaluation information on the business partner from the transaction data, extracts a value of a financial status of the business partner as the evaluation result on the business partner from the transaction data, and generates the credit information on the business partner by applying the predetermined rule defined in advance to the evaluation values and the value of the financial status.

In this way, it is possible to make a judgment on the quality, cost, and delivery of a transaction-target product, service, or the like, which greatly affect the credit information on the business partner, and reflect the result of the judgment in the credit information. This accordingly enables efficient and wide use of more accurate credit information on supply chain participants.

Also, the credit analysis assistance method in the present embodiment may be such that the node, when extracting each of the evaluation information and the evaluation result, extracts evaluation information and an evaluation result on an indirect business partner hierarchically associated with the business partner in a business relationship from transaction data on the indirect business partner, in addition to the evaluation information and the evaluation result on the business partner, and when generating the credit information, applies the predetermined rule defined in advance to the pieces of evaluation information and the evaluation results on the business partner and the indirect business partner to generate the credit information on the business partner.

In this way, the pieces of evaluation information and the evaluation results on involved parties in the hierarchical structure in the supply chain, such as a supplier of a component, a supplier of a semi-manufactured product using the component, and a supplier of a product using the semi-manufactured product, can be reflected in the credit information as appropriate with the association among these involved parties taken into account. This accordingly enables efficient and wide use of more accurate credit information on supply chain participants.

Also, the credit analysis assistance method in the present embodiment may be such that in the extraction of the evaluation information and of the evaluation result by the node, only transaction data in a predetermined previous period from a present time is a processing target in the extraction.

In this way, it is possible to avoid a situation where, for example, old evaluation information and evaluation result are used to generate the credit information, and reflect what are called fresh evaluation information and evaluation result in the credit information. This accordingly enables efficient and wide use of more accurate credit information on supply chain participants.

Also, the credit analysis assistance method in the present embodiment may be such that each of the plurality of nodes further executes issuance of transaction data containing evaluation information on a business partner in a predetermined transaction, storage of the transaction data in the distributed ledger after a consensus is built between the nodes, and building of a consensus between the nodes for the transaction data containing the evaluation result issued by a node of the external institution and storage of the transaction data in the distributed ledger.

In this way, various pieces of information on transactions in the supply chain can be held in the distributed ledger and utilized to generate credit information. This accordingly enables efficient and wide use of more accurate credit information on supply chain participants.

### [Reference Signs List]

- 1, 5: Network
- 10: Credit analysis assistance system
- 100: Node
- 101: Storage device
- 102: Program
- 103: Memory
- 104: Arithmetic device
- 105: Input device
- 106: Output device
- 107: Communication device
- 110: Distributed ledger
- 111: API
- 150: Client terminal
- 200: Buyer node

- 300: Supplier node
- 400: Certification institution node
- 500: Financial institution node

## Claims

1. A credit analysis assistance method for a system including a plurality of nodes each holding, in a distributed ledger, predetermined transaction data on transactions in a supply chain, the method comprising executing by a node of a party involved in a predetermined transaction
a process of extracting evaluation information on a business partner in the transaction from the predetermined transaction data in the distributed ledger,
a process of extracting an evaluation result on the business partner determined by a predetermined external institution from the predetermined transaction data in the distributed ledger, and
a process of generating credit information on the business partner by applying a predetermined rule defined in advance to the evaluation information and the evaluation result.

2. The credit analysis assistance method according to claim 1, wherein the node
extracts an evaluation value of each of a quality, a cost, and delivery of a transaction target as the evaluation information on the business partner from the transaction data,
extracts a value of a financial status of the business partner as the evaluation result on the business partner from the transaction data, and
generates the credit information on the business partner by applying the predetermined rule defined in advance to the evaluation values and the value of the financial status.

3. The credit analysis assistance method according to claim 1, wherein the node
when extracting each of the evaluation information and the evaluation result, extracts evaluation information and an evaluation result on an indirect business partner hierarchically associated with the business partner in a business relationship from transaction data on the indirect business partner, in addition to the evaluation information and the evaluation result on the business partner, and
when generating the credit information, applies the predetermined rule defined in advance to the pieces of evaluation information and the evaluation results on the business partner and the indirect business partner to generate the credit information on the business partner.

4. The credit analysis assistance method according to claim 1, wherein in the extraction of the evaluation information and of the evaluation result by the node, only transaction data in a predetermined previous period from a present time is a processing target in the extraction.

5. The credit analysis assistance method according to claim 1, wherein each of the plurality of nodes further executes
issuance of transaction data containing evaluation information on a business partner in a predetermined transaction,
storage of the transaction data in the distributed ledger after a consensus is built between the nodes, and
building of a consensus between the nodes for the transaction data containing the evaluation result issued by a node of the external institution and storage of the transaction data in the distributed ledger.

6. A credit analysis assistance system including a plurality of nodes each holding, in a distributed ledger, predetermined transaction data on transactions in a supply chain, the system comprising executing by a node of a party involved in a predetermined transaction
a process of extracting evaluation information on a business partner in the transaction from the predetermined transaction data in the distributed ledger,
a process of extracting an evaluation result on the business partner determined by a predetermined external institution from the predetermined transaction data in the distributed ledger, and
a process of generating credit information on the business partner by applying a predetermined rule defined in advance to the evaluation information and the evaluation result.

7. A node included in a distributed ledger system and holding, in a distributed ledger, predetermined transaction data on transactions in a supply chain, the node comprising an arithmetic device that executes
a process of extracting evaluation information on a business partner in a predetermined transaction from the predetermined transaction data in the distributed ledger,
a process of extracting an evaluation result on the business partner determined by a predetermined external institution from the predetermined transaction data in the distributed ledger, and
a process of generating credit information on the business partner by applying a predetermined rule defined in advance to the evaluation information and the evaluation result.
